# EUROPEAN PATENT APPLICATION

(11) **EP 2 472 399 A1**
(43) Date of publication of application: **04.07.2012**
(21) Application number: 11176230.8
(22) Date of filing: 02.08.2011
(51) Int. Cl.: G06F 9/50, G06F 9/48

(54) **Mobile terminal and method for managing tasks at a platform level**

(30) Priority: 30.12.2010 KR 20100139159
(71) Applicant: Pantech Co., Ltd., Seoul 121-792 (KR)
(72) Inventor: Seo, Jung Woo, 121-792 Seoul (KR); Shin, Youn Seok, 121-792 Seoul (KR); Kim, Dae Gil, 121-792 Seoul (KR); Youn, Hyun Sook, 121-792 Seoul (KR); Oh, Jong In, 121-792 Seoul (KR); Yoo, Jung Im, 121-792 Seoul (KR); Lee, Jung, 121-792 Seoul (KR); Lee, Jung In, 121-792 Seoul (KR)
(74) Representative: Jordan, Volker Otto Wilhelm

(57) **Abstract**

A mobile terminal includes an execution unit to execute tasks, a determination unit to determine whether to manage the executed tasks and to generate a termination processing signal for terminating a first executed tasks if the executed tasks are to be managed, and a control unit to terminate the first executed task according to the termination processing signal generated by the determination unit. A method for managing tasks includes executing tasks, determining whether to manage the executed tasks, generating a termination processing signal for terminating a first executed task according to the determination result, and terminating the first executed task according to the termination processing signal.

## Description

### CROSS-REFERENCE TO RELATED APPLICATION

This application claims priority from and the benefit under 35 U.S.C. §119(a) of Korean Patent Application No. 10-2010-0139159, filed on December 30, 2010, which is incorporated by reference for all purposes as if fully set forth herein.

### BACKGROUND

1. FIELD

The present disclosure relates to a mobile terminal and a method for managing tasks at platform level.

2. DISCUSSION OF THE BACKGROUND

Recently, mobile terminals include various services and various convenient functions including multitasking, which allows for simultaneously performing several tasks. That is, a user may check a message of a short message service (SMS), a multimedia message service (MMS) or an enhanced message service (EMS) or write a new message while executing a music file. In addition, a user may view photos or write a new message while listening to music. However, in a conventional mobile terminal, the users of the conventional mobile terminal may suffer from performance deterioration during multitasking. For example, if a user simultaneously executes a music file play function, a message writing function and a camera function, performance deterioration such as decrease in execution speed may occur due to excessive load.

### SUMMARY

Exemplary embodiments of the present invention provide a mobile terminal to manage tasks at platform level. Exemplary embodiments of the present invention also provide a method for managing tasks at platform level.

Additional features of the invention will be set forth in the description which follows, and in part will be apparent from the description, or may be learned by practice of the invention.

Exemplary embodiments of the present invention provide a mobile terminal including an execution unit to execute tasks; a determination unit to determine whether to manage the executed tasks, and to generate a termination processing signal for terminating a first executed task if the executed tasks are to be managed; and a control unit to terminate the first executed task according to the termination processing signal.

Exemplary embodiments of the present invention provide a mobile terminal including an execution unit to execute tasks; a determination unit to determine whether to manage the executed tasks, wherein the determination unit determines that the executed tasks are to be managed if the determination unit receives an instructional signal to terminate a first executed task, and to generate a termination processing signal for terminating the first executed task if the determination unit receives the instructional signal to terminate the first executed task; a setting unit to store priority list information and ignore list information; and a control unit to terminate the first executed task according to the termination processing signal generated by the determination unit and the information stored in the setting unit.

Exemplary embodiments of the present invention provide a method for controlling a mobile terminal including executing tasks; determining whether to manage the executed tasks; generating a termination processing signal for terminating a first executed tasks according to the determination result; and terminating the first executed tasks according to the termination processing signal.
It is to be understood that both forgoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a configuration of a mobile terminal according to an exemplary embodiment of the invention.

FIG. 2A, FIG. 2B, and FIG. 2C are diagrams illustrating a method for controlling the mobile terminal according to an exemplary embodiment of the invention.

FIG. 3A and FIG. 3B are diagrams illustrating menu screens displayed for terminating tasks in the mobile terminal according to an exemplary embodiment of the invention.

### DETAILED DESCRIPTION OF THE ILLUSTRATED EMBODIMENTS

The invention is described more fully hereinafter with reference to the accompanying drawings, in which exemplary embodiments are shown. This disclosure may, however, be embodied in many different forms and should not be construed as limited to the embodiments set forth herein. Rather, these exemplary embodiments are provided so that this disclosure is thorough and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defmed herein.

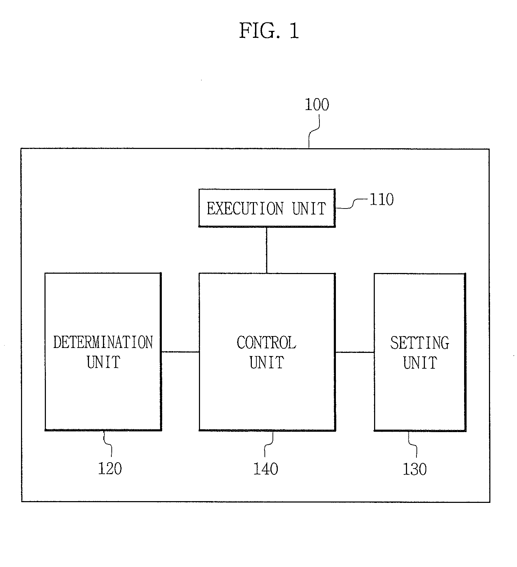

FIG. 1 is a diagram illustrating a configuration of a mobile terminal according to an exemplary embodiment of the invention.

Referring to FIG. 1, a mobile terminal 100 according to an embodiment includes an execution unit 110, a determination unit 120, a setting unit 130, and a control unit 140.

The execution unit 110 executes tasks processed by the mobile terminal 100. In an example, the task may be a program, an application or an operation processed by the mobile terminal 100. The mobile terminal 100 may execute one or more applications for performing specific functions using the execution unit 110.

The determination unit 120 determines whether or not to manage the tasks executed by the execution unit 110. If it is determined that the tasks are to be managed, the determination unit 120 may generate a termination processing signal to terminate all or part of the executed tasks.

In an example, the determination unit 120 may determine whether or not to manage the tasks according to a reference criterion or according to an instruction signal inputted by a user.

In an example, a user instruction signal may be a key input signal received by pressing a particular key such as a power key for at least a reference time, an input signal including a combination of particular keys, or the like. The determination unit 120 may generate the termination processing signal if the user instruction signal requesting such action is received.

In addition, a threshold value may be specified with respect to an amount of CPU capacity, memory capacity, or storage capacity used by the mobile terminal. If the amount of CPU capacity, memory capacity, or storage capacity used by the mobile terminal meets or exceeds the threshold value, it may be determined that an excessive load is incurred by the mobile terminal, and the determination unit 120 may generate the termination processing signal. In an example, CPU capacity may be measured at an instant, measured over a certain period of time, measured as network data transmission speeds where one or more of the tasks require network connection to perform certain tasks, or the like. Further, memory may be a random access memory (RAM) or the like. Storage may be hard drive space to or the like.

For example, if the amount of CPU capacity, memory capacity, or storage capacity used by the mobile terminal 100 meets or exceeds the threshold value such as 90% of total capacity, the determination unit 120 may determine that the excessive load is incurred by the mobile terminal and automatically generate the termination processing signal for terminating the executed tasks.

The setting unit 130 stores a priority list for task termination, an ignore list for task termination, or the like, which may be used if one or more tasks are to be terminated. In an example, the priority list may prioritize tasks to terminate in order of inactive status duration or by other schemes. Accordingly, if a web-browsing program has been in an inactive status longer than an instant messaging program, the web-browsing program may be terminated before the instant messaging program if a termination signal is received. Alternatively, the ignore list may provide a list of tasks which may be exempt from being terminated by the received termination signal. Accordingly, if the web-browsing program in the above example had been on the ignore list, the web-browsing program will remain active and the instant messaging program may be terminated even if the termination signal is received. Other conditions may influence a task's position on the priority list. For example, if a user has a desired web page open in the web-browsing program, the user may wish to return to that task to read the web page. Thus, the web-browsing program may be adjusted in the priority list so that it is less likely to be terminated. Alternatively, upon this condition, the web-browsing program may not change its position on the priority list. Instead it may not be terminated automatically in this case, and may be terminated only upon receiving a user's confirmation.

The control unit 140 terminates all or part of the tasks according to the termination processing signal generated by the determination unit 120. The control unit 140 may further enable a user to select the tasks to terminate if user input is desired.

The control unit 140 may automatically terminate the executed tasks according to the termination processing signal, display an input option for selecting the tasks to be terminated and terminate the tasks according to a user input, or execute a task manager application for terminating the tasks and generating a termination processing signal using the task manager application.

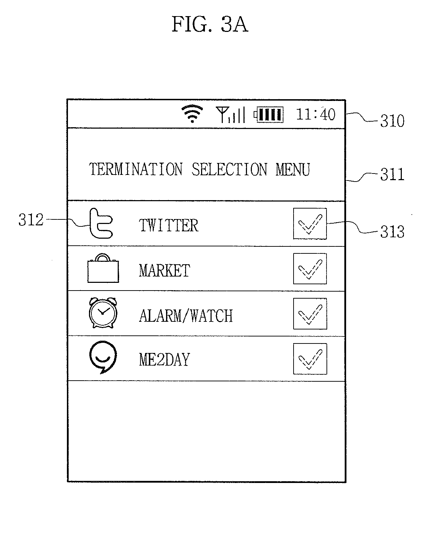

If the control unit 140 is to terminate executed tasks according to the input option scheme, the control unit 140 may display a termination selection menu screen 310 as illustrated in FIG. 3A. A list of one or more tasks which are being executed may be displayed on the screen on which the termination selection menu is displayed and the selected tasks receiving termination instruction may be terminated.

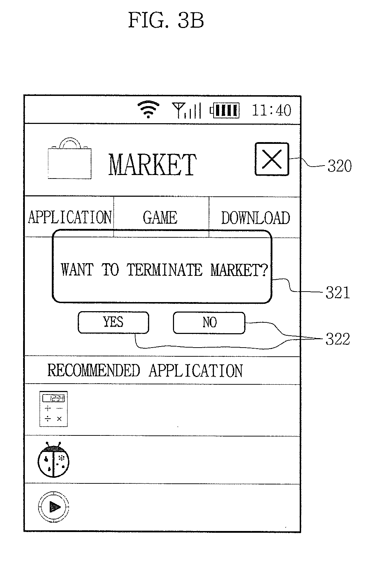

Alternatively, the control unit 140 may display a soft key for terminating the tasks on the executed tasks screen as illustrated in FIG. 3B, if the control unit 140 is to terminate executed tasks according to the input option scheme. The soft key refers to a display icon which may be defined by software and displayed on a touch screen in order to perform a specific function. Some of the functions may include termination function, controlling of a display function, or the like. The soft key may be set to be displayed flexibly on the display screen.

More specifically, the control unit 140 may display a termination soft key to perform a task termination function, or display screen control soft key to control a display screen size, such as reduction or minimization of the display screen. Further, the soft key may be provided on the display screen to be superimposed on the executed task screen displayed on the display screen, and receive a user instruction through the displayed soft key.

In addition, if the control unit 140 terminates one or more tasks which are being executed, the tasks may be terminated according to a priority list or an ignore list for task termination stored in the setting unit 130. If one or more tasks are simultaneously executed by the mobile terminal 100, the executed tasks may be terminated as the execution speed decreases due to excessive load. In an example, if priority list stored in the setting unit 130 is set in the order of an inactive application, a background application, an active application and a system application, the control unit 140 may control the inactive application to be terminated first according to the priority. Alternatively, if the ignore list for task termination is stored in the setting unit 130, the tasks belonging to the ignore list may not terminated, and the remaining tasks may be terminated.

In addition, the control unit 140 may control the screen to be automatically switched to a home screen or control the last executed application to be executed again according to configured setting after the executed tasks are terminated.

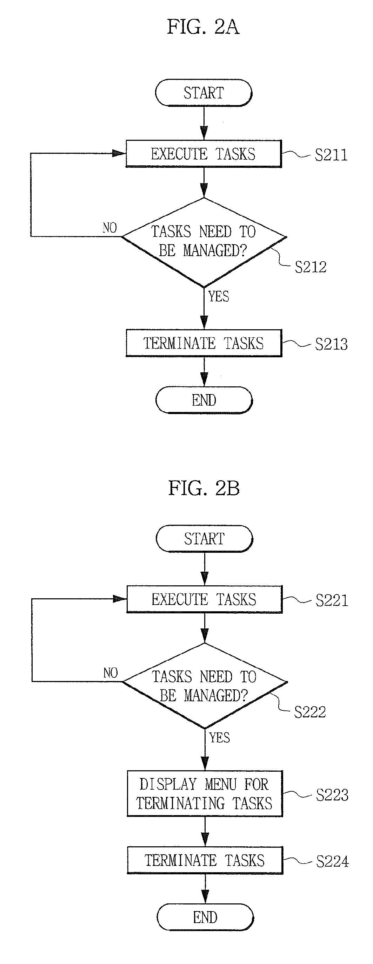

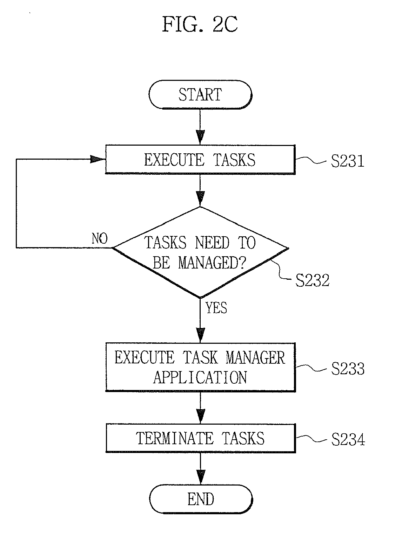

FIG. 2A, FIG. 2B, and FIG. 2C are diagrams illustrating a method for controlling the mobile terminal according to an exemplary embodiment of the invention.

Referring to FIG. 2A, in a state in which the tasks are executed by the mobile terminal (S211), if it is determined that the executed tasks are to be managed due to decrease in execution speed or as determined by the user (S212), the executed tasks are automatically terminated at platform level (S213).

Referring to FIG. 2B, in a state in which the tasks are executed by the mobile terminal (S221), if it is determined that the executed tasks are to be managed due to decrease in execution speed or as determined by the user (S222), a menu for terminating the tasks is displayed under the control of the platform of the mobile terminal (S223) in order to terminate the tasks, and the executed tasks are terminated according to the user instruction inputted onto the displayed menu (S224).

Referring to FIG. 2C, in a state in which the tasks are executed by the mobile terminal (S231), if it is determined that the executed tasks are to be managed due to decrease in execution speed or as determined by the user (S232), a task manager application is executed in the mobile terminal (S233), and the executed tasks are terminated using the task manager application (S234).

FIG. 3A and FIG. 3B are diagrams illustrating menu screens displayed to terminate tasks in the mobile terminal according to an exemplary embodiment of the invention.

Referring to FIG. 3A, in a state in which one or more tasks including Twitter ®, Market, Alarm/Watch, and Me2Day are executed by the mobile terminal, a termination selection menu 310 for terminating the executed tasks may be displayed if the executed tasks are to be managed.

As shown in FIG. 3A, the termination selection menu 310 includes a task list 311 including the titles 312 and selection icons 313 of one or more tasks. The user may select the tasks to be terminated and input an instruction to terminate the selected tasks.

Referring to FIG. 3B, in a state in which tasks are executed by the mobile terminal, a soft key 320 to terminate the tasks may be displayed in a state in which the executed tasks are displayed if it is determined that the executed tasks are to be managed.

In addition to the soft key, a popup window 321 to ask the user whether or not the tasks displayed on the screen are to be terminated and an input window 322 to receive a user instruction may be further displayed.

The mobile terminal and the method of controlling the same according to this disclosure are not limited to the above-described embodiments, and all or some of the embodiments may be combined such that various modifications may be made.

According to the mobile terminal and the method of controlling the same of the disclosure, since the tasks are directly managed at platform level, it may be possible to more efficiently utilize the mobile terminal through operation control.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A mobile terminal, comprising:
an execution unit to execute tasks;
a determination unit to determine whether to manage the executed tasks, and to generate a termination processing signal for terminating a first executed task if the executed tasks are to be managed; and
a control unit to terminate the first executed task according to the termination processing signal.

2. The mobile terminal of claim 1, wherein the control unit displays an input option to receive a user instruction to terminate one or more of the executed tasks.

3. The mobile terminal of claim 2, wherein the input option comprises a task termination menu display screen or a soft key displayed on an executed task screen to terminate the tasks;
wherein the soft key preferably comprises a termination key to terminate the first executed task or a screen control key to minimize a display screen.

4. The mobile terminal of one of claims 1 to 3, wherein the control unit terminates the first executed task or executes a task manager application to terminate the first executed task according to the termination processing signal.

5. The mobile terminal of one of claims 1 to 4, wherein if the control unit executes the task manager application, the control unit terminates the first executed task according to the generated termination processing signal using the task manager application.

6. The mobile terminal of one of claims 1 to 5, wherein the determination unit determines that the executed tasks are to be managed if the determination unit receives an instructional signal to terminate one or more of the executed tasks;
or/and
wherein the determination unit receives a reference user signal, and recognizes the user signal as an instruction signal to terminate one or more of the executed tasks;
or/and
wherein the determination unit recognizes a key input signal of a key pressed for a reference time as an instruction signal to terminate one or more of the executed tasks;
or/and
wherein the determination unit recognizes a combination input signal of particular keys as an instruction signal to terminate one or more of the executed tasks.

7. The mobile terminal of one of claims 1 to 6, further comprising a soft key generation unit to display a soft key to receive a termination instruction signal for one or more of the executed tasks, wherein the determination unit receives the termination instruction signal through the soft key and generates the termination processing signal.

8. The mobile terminal of one of claims 1 to 7, wherein the determination unit determines that the executed tasks are to be managed if at least one of an amount of CPU capacity, memory capacity, or storage capacity used by the mobile terminal meets or exceeds a threshold value.

9. The mobile terminal of one of claims 1 to 8, further comprising a setting unit to store priority list information for task termination, wherein the control unit terminates the tasks according to the priority list information stored in the setting unit if one or more tasks are to be terminated.

10. The mobile terminal of one of claims 1 to 9, further comprising a setting unit to store ignore list information for task termination, wherein the control unit does not terminate the tasks in the ignore list information stored in the setting unit if one or more tasks are to be terminated.

11. A method for managing tasks, comprising:
executing tasks;
determining whether to manage the executed tasks;
generating a termination processing signal for terminating a first executed task according to the determination result; and
terminating the first executed task according to the termination processing signal.

12. The method of claim 11, wherein terminating the first executed task comprises displaying a menu for terminating the tasks, and terminating the first executed task according to a user instruction inputted into the menu.

13. The method of claim 11 or 12, wherein terminating the first executed task comprises executing a task manager application, and terminating the first executed task according to the generated termination processing signal using the task manager application.

14. The method of one of claims 11 to 13, wherein determining whether to manage the executed tasks further comprises determining if at least one of an amount of CPU capacity, memory capacity, or storage capacity used by the mobile terminal meets or exceeds a reference threshold value.

15. The mobile terminal of one of claims 1 to 10, wherein the determination unit determines that the executed tasks are to be managed if the determination unit receives an instructional signal to terminate a first executed task, and to generate a termination processing signal for terminating the first executed task if the determination unit receives the instructional signal to terminate the first executed tasks;
wherein the mobile terminal comprises:
a setting unit to store priority list information and ignore list information; and
a control unit to terminate the first executed task according to the termination processing signal generated by the determination unit and the information stored in the setting unit.
